# EUROPEAN PATENT APPLICATION

(11) **EP 3 104 430 A1**
(43) Date of publication of application: **14.12.2016**
(21) Application number: 16174052.7
(22) Date of filing: 10.06.2016
(51) Int. Cl.: H01M 2/16, H01M 2/14, H01M 10/0525

(54) **NONWOVEN NANOFIBER SEPARATOR AND METHOD OF IMPROVING PHYSICAL STABILITY OF BATTERY SEPARATOR**

(30) Priority: 11.06.2015 US 201562230648 P
(71) Applicant: Nano and Advanced Materials Institute Limited, Hong Kong (CN)
(72) Inventor: LIU, Chenmin, Hong Kong (HK); KWOK, Chi Ho, Hong Kong (HK); LUO, Hui, Hong Kong (HK)
(74) Representative: Hocking, Adrian Niall

(57) **Abstract**

A nonwoven nanofiber separator, including a composite of a first polymer material and a second polymer material, wherein: the first polymer material may include at least one member selected from the group consisting of poly(vinylidene fluoride), polyimide, polyamide and polyacrylonitrile; the second polymer material may include at least one member selected from the group consisting of polyethylene glycol, polyacrylonitrile, poly(ethylene terephthalate), poly(vinylidene fluoride), poly(vinylidene fluoride-hexafluoropropylene) and poly(vinylidene fluoride-co-chlorotrifluoroethylene); and the second polymer material is different from the first polymer material. A method of improving physical stability of a battery separator with improved performance is also provided.

## Description

### Field of the Patent Application

The present application relates to an electrospun nonwoven nanofiber separator and a method of improving physical stability of a battery separator with improved performance.

### Background

Flexible thin film battery market is an attractive and fast growing market characterized by very high production volumes. To sustain its growth, manufacturers have tried to make them extremely reliable and low in cost. Thin-film flexible lithium-ion batteries (LIB) are ideally suited for a variety of applications where small-power sources are needed. They can be manufactured in a variety of shapes and sizes as required by customers. By using the available space within a device, the battery can provide the required power while occupying otherwise wasted space and adding negligible mass. While flexible batteries are frequently bent and stretched, battery separators need to have superior mechanical strength, in addition to chemical stability, to withstand the stress.

Polymeric nonwovens have been used as separators in flexible lithium-ion batteries. They are fibrous mats made by bonding numerous fibers directionally or randomly together through chemical, physical or mechanical methods. Both natural and synthetic materials have been used to manufacture the fibers for separators in lithium-ion batteries. They are generally uniform in weight, easily controlled in thickness, and have high porosity and resistance to degradation by electrolyte.

Materials such as polyethylene (PE), polypropylene (PP), polyamide (PA), poly(tetrafluoroethylene) (PTFE), poly(vinylidene fluoride) (PVDF) and poly(vinyl chloride) (PVC) are commonly used in fabrication of nanofiber separators. They can be single formulated polymers or complexes of polymers formulated as composites. However, it is difficult to make a thin nonwoven fabric mat with acceptable physical properties, mechanical stabilities and comparable battery performances as compared with microporous polymer films separator.

Therefore, there is a need to provide a polymeric nonwoven nanofabric separator for lithium-ion batteries showing high porosity, good wettability, high puncture strength and comparable dimension stability with microporous thin film separators.

### Summary

In one aspect, the present application provides a nonwoven nanofiber separator, including a composite of a first polymer material and a second polymer material, wherein:
the first polymer material may include at least one member selected from the group consisting of poly(vinylidene fluoride), polyimide, polyamide and polyacrylonitrile;
the second polymer material may include at least one member selected from the group consisting of polyethylene glycol, polyacrylonitrile, poly(ethylene terephthalate), poly(vinylidene fluoride), poly(vinylidene fluoride-hexafluoropropylene) and poly(vinylidene fluoride-co-chlorotrifluoroethylene); and
the second polymer material is different from the first polymer material.

In another embodiment, in conjunction with any of the above and below embodiments, the first polymer material may include poly(vinylidene fluoride) and the second polymer material may include poly(vinylidene fluoride-hexafluoropropylene).

In another embodiment, in conjunction with any of the above and below embodiments, the second polymer material may have a melting temperature lower than a melting temperature of the first polymer material.

In another embodiment, in conjunction with any of the above and below embodiments, the first and second polymer materials may be in a weight ratio ranging from about 3:1 to about 1:1, preferably about 3:1 to about 2:1, more preferably about 3:1 to about 3:2, and most preferably about 3:1.

In another embodiment, in conjunction with any of the above and below embodiments, the nonwoven nanofiber separator may further include at least one additive selected from the group consisting of tetramethyl orthosilicate and tetraethyl orthosilicate.

In another embodiment, in conjunction with any of the above and below embodiments, the nonwoven nanofiber separator may be prepared by electrospinning a polymer formulation on aluminum foil to give a freestanding separator, wherein the polymer formulation may include the first polymer material, the second polymer material, at least one solvent, optionally the at least one additive and optionally lithium chloride.

In another embodiment, in conjunction with any of the above and below embodiments, the polymer formulation may include the first and second polymer materials in a total amount of about 15-25 wt.% of the formulation, preferably about 15-20 wt.%, and more preferably about 16.5 wt.%.

In another embodiment, in conjunction with any of the above and below embodiments, the polymer formulationmay further include about 1-5 wt.% of the at least one additive, preferably about 2-5 wt.%, more preferably about 3-5 wt.%, and most preferably about 5 wt.%.

In another embodiment, in conjunction with any of the above and below embodiments, the polymer formulation may include about 0.1-0.6µg of lithium chloride solution, preferably about 0.1-0.5µg, more preferably about 0.2-0.4µg, and most preferably about 0.3-0.4µg.

In another embodiment, in conjunction with any of the above and below embodiments, the at least one solvent may be selected from the group consisting of *N*-methyl-2-pyrrolidone, *N,N-*dimethylacetamide, *N,N*-dimethylformamide, dimethyl sulfoxide, acetone and tetrahydrofuran.

In another embodiment, in conjunction with any of the above and below embodiments, the at least one solvent may include N,N-dimethylacetamide and acetone.

In another embodiment, in conjunction with any of the above and below embodiments, the at least one solvent may include N,N-dimethylacetamide and acetone in a weight ratio ranging from about 3:1 to about 1:1, preferably about 2:1 to about 1:1, more preferably about 1.5:1 to about 1:1, and most preferably about 1.25:1.

In another embodiment, in conjunction with any of the above and below embodiments, the nonwoven nanofiber separator may be prepared by the following steps:
adding the first and second polymer materials into the at least one solvent, optionally together with lithium chloride;
heating the mixture at around 80-100°C with stirring for about 2-5 hours;
optionally adding the at least one additive, followed by heating at around 80-100°C for about 2-5 hours;
cooling down the polymer formulation solution to room temperature; and
loading the polymer formulation solution to a syringe for electrospinning.

In another embodiment, in conjunction with any of the above and below embodiments, the nonwoven nanofiber separator may be thermal annealed after the electrospinning.

In another embodiment, in conjunction with any of the above and below embodiments, the annealing temperature maybe lower than the melting points of the first and second polymer materials.

In another embodiment, in conjunction with any of the above and below embodiments, the nonwoven nanofiber may be thermal annealed at around 100-165°C for about 1-10 hour.

In another aspect, the present application provides a method of improving physical stability of a battery separator, including:
dissolving at least one polymer into at least one solvent to form a polymer solution; and
electrospinning the polymer solution on, either one side or both sides of, the battery separator as nanofiber coating; wherein,
the at least one polymer may be selected from the group consisting of poly(vinylidene fluoride), polyimide, polyamide, polyacrylonitrile, polyethylene glycol, poly(ethylene terephthalate), poly(vinylidene fluoride-hexafluoropropylene), and poly(vinylidene fluoride-co-chlorotrifluoroethylene).

In another embodiment, in conjunction with any of the above and below embodiments, the at least one polymer may be poly(vinylidene fluoride-hexafluoropropylene).

In another embodiment, in conjunction with any of the above and below embodiments, the polymer solution may include the at least one polymer in an amount of about 10-40 wt.%, preferably about 10-30 wt.%, more preferably about 10-20 wt.%, and most preferably about 10-15 wt.%.

In another embodiment, in conjunction with any of the above and below embodiments, the at least one solvent may be selected from the group consisting of *N*-methyl-2-pyrrolidone, *N,N-*dimethylacetamide, *N,N*-dimethylformamide, dimethyl sulfoxide, acetone and tetrahydrofuran.

### Brief Description of the Drawings

The embodiments of the present application are described with reference to the attached figures, wherein:
FIGs. 1a-1b show the SEM images of Separator I.
FIGs. 2a-2b show the SEM images of Separator II.
FIGs. 3a-3b show the SEM images of Separator III.
FIGs. 4a-4b show the SEM images of Separator IV.
FIG. 5 shows the SEM image of Separator V.
FIGs. 6a and 6b show SEM images of the nanofiber coated Separator VI.
FIGs. 7a-7d illustrate the mechanical performance of Separators I-IV, respectively.
FIGs. 8a-8c are the DSC curves of Separators I, III and IV, respectively.
FIGs. 9a-9c show the TGA results of Separators I, III and IV, respectively.
FIGs. 10a-10e show the contact angle images of Separators I-IV and a commercial separator, Celgard®, respectively.
FIGs. 10f-10g show the contact angle images of Separator VI on the side without and with nanofiber coating, respectively.
FIG. 11 shows the schematic set-up of mix puncture strength study.
FIG. 12a shows the battery performance of Cells 1 and 2.
FIG. 12b shows the battery performance of FB 134 and FB 136.

### Detailed Description

Reference will now be made in detail to preferred embodiments of nonwoven nanofiber separators and methods of improving physical stability of a battery separator, examples of which are also provided in the following description. Exemplary embodiments of the methods disclosed in the present application are described in detail, although it will be apparent to those skilled in the relevant art that some features that are not particularly important to an understanding of the present application may not be shown for the sake of clarity.

Before the present application is described in further detail, it is to be understood that the terminology used herein is for the purpose of describing particular embodiments only, and is not intended to be limiting, since the scope of the present application will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the application. The upper and lower limits of these smaller ranges may independently be included in the smaller ranges is also encompassed within the application, subject to any specifically excluded limit in the stated range. Where the stated range includes one or both of the limits, ranges excluding either or both of those included limits are also included in the application.

Unless defined otherwise, all technical and scientific terms used herein have the same meaning as commonly understood by one of ordinary skill in the art to which this application belongs. Although any methods and materials similar or equivalent to those described herein can also be used in the practice or testing of the present application, a limited number of the exemplary methods and materials are described herein.

It must be noted that as used herein and in the appended claims, the singular forms "a", "an", and "the" include plural referents unless the context clearly dictates otherwise.

In the first aspect, the present application provides an electrospun nonwoven nanofiber separator including a composite of a first polymer material and a second polymer material. The first polymer material may include poly(vinylidene fluoride) (PVDF), polyimide (PI), polyamide (PA) or polyacrylonitrile (PAN). The second polymer material may include polyethylene glycol (PEG), polyacrylonitrile (PAN), poly(ethylene terephthalate) (PET), poly(vinylidene fluoride) (PVDF), poly(vinylidene fluoride-hexafluoropropylene) (PVDF-HFP) or poly(vinylidene fluoride-co-chlorotrifluoroethylene) (PVDF-co-CTFE), wherein the second polymer material is different from the first polymer material.

PVDF has been widely used for making ultrafiltration and microfiltration membranes owing to its excellent chemical resistance and good thermal stability. Pure PVDF polymer has high melting point and crystallinity, and good mechanical properties. However, it is only soluble in a limited number of solvents, such as *N-*methyl-2-pyrrolidone (NMP), *N*,*N-*dimethylacetamide (DMAC), *N,N-*dimethylformamide (DMF), dimethyl sulfoxide (DMSO), and shows low swelling ability when soaked in common electrolytes.

Copolymer PVDF-HFP has been studied for the application in rechargeable lithium ion batteries. It can improve the solubility, making the polymer soluble in common organic solvents, such as acetone and tetrahydrofuran (THF), which can further improve the process capability. In addition, it has very high swelling ability which can enhance the electrolyte uptake for the separator layer.

The inventors of the present application found that the composite of PVDF and PVDF-HFP offers many advantages over other polymers in the fabrication of separators, such as:
electrochemically stable from 0 to 5V *vs* Li⁺/Li;
better solubility than pure PVDF alone which enhances the probability of processing;
fast wettability of electrolyte than PVDF;
better controlled leakage of electrolyte;
durable adhesion with electrodes; and
good flexibility.

Accordingly, in a preferred embodiment, the electrospun nonwoven nanofiber separator of the present application includes a composite of PVDF and PVDF-HFP.

In another embodiment, in conjunction with any of the above and below embodiments, the first polymer material may have a melting temperature greater than about 170°C. In another embodiment, in conjunction with any of the above and below embodiments, the second polymer material has a melting temperature lower than that of the first polymer material such that the second polymer material is melted and fused together during thermal runaway which will reduce the porosity in the layer and slow down the Li-ion transport or prevent the electrochemical reaction.

In another embodiment, in conjunction with any of the above and below embodiments, the first and second polymer materials may be in the weight ratio ranging from about 3:1 to about 1:1, preferably about 3:1 to about 2:1, more preferably about 3:1 to about 3:2, and most preferably about 3:1.

In another embodiment, in conjunction with any of the above and below embodiments, the electrospun nonwoven nanofiber separator of the present application may further include at least one additive selected from the group consisting of tetramethyl orthosilicate (TMOS) and tetraethyl orthosilicate (TEOS). These additives can be hydrolyzed into ceramic components, thereby improving the surface texture and enhancing dimensional stability of the separator.

In another embodiment, in conjunction with any of the above and below embodiments, the electrospun nonwoven nanofiber separator of the present application may be prepared by electrospinning a polymer formulation on aluminum foil to give a freestanding separator. The polymer formulation may include the first and second polymer materials in a total amount of about 15-25 wt.% of the formulation, preferably about 15-20 wt.%, and more preferably about 16.5 wt.%.

In another embodiment, in conjunction with any of the above and below embodiments, the polymer formulationfor electrospinning the nonwoven nanofiber separator of the present application may further include about 1-5 wt.% of the at least one additive, preferably about 2-5 wt.%, more preferably about 3-5 wt.%, and most preferably about 5 wt.%.

In another embodiment, in conjunction with any of the above and below embodiments, the polymer formulation for electrospinning the nonwoven nanofiber separator of the present application may further include lithium chloride (LiCl) to facilitate ion transfer across the separator and facilitate the electrospinning process by increasing the conductivity of the polymer solution. In a preferred embodiment, the polymer formulation may include about 0.1-0.6µg of LiCl, preferably about 0.1-0.5µg, more preferably about 0.2-0.4µg, and most preferably about 0.3-0.4µg.

In another embodiment, in conjunction with any of the above and below embodiments, the polymer formulation for electrospinning the nonwoven nanofiber separator of the present application may include at least one solvent selected from the group consisting of *N-*methyl-2-pyrrolidone (NMP), *N,N*-dimethylacetamide (DMAC), *N,N-*dimethylformamide (DMF), dimethyl sulfoxide (DMSO), acetone and tetrahydrofuran (THF). In a preferred embodiment, the polymer formulationmay include DMF and acetone. In another preferred embodiment, the polymer formulation may include DMF and acetone in a weight ratio ranging from about 3:1 to about 1:1, preferably about 2:1 to about 1:1, more preferably about 1.5:1 to 1:1, and most preferably about 1.25:1.

In another embodiment, in conjunction with any of the above and below embodiments, the nonwoven nanofiber separator of the present application may be electrospun by the following steps:
adding the first and second polymer materials into the at least one solvent, optionally together with LiCl;
heating the mixture at around 80-100°C with stirring for about 2-5 hours; and
optionally adding the at least one additive, followed by heating at around 80-100°C for about 2-5 hours;
cooling the polymer formulation solution to room temperature; and
loading the polymer formulation solution into the carriage for electrospinning.

In another embodiment, in conjunction with any of the above and below embodiments, electrospinning of the nonwoven nanofiber separator of the present application may be performed under the following parameters:
Temperature: about 20-30°C;
Voltage: about 20-50kV;
Relative humidity (RH): about 25-60%;
Spinner height: 100-150mm; and
Feed rate: 5.5-8.5 ml/h.

In another embodiment, in conjunction with any of the above and below embodiments, the nanofiber has a diameter between about 100nm to about 300nm. The nonwoven nanofiber separator of the present application may have a porosity of about 60% to about 90% as compared to solid thin film prepared by polyethylene (PE)/ polypropylene (PP) materials. The average pore size may be less than 1µm. The nonwoven nanofiber separator may have mix puncture strength of>500 N.

Many reports have indicated that electrospun PVDF fiber mats have poorer physical properties than other polymer films, which is mainly attributed to the nonwoven nature and low interconnection between each fiber. While not wishing to be bound by theory, it is believed that thermal annealing of electrospun nanofiber separator can enhance the interconnection between fibers, thereby improve the physical stability, tensile strength, elongation at break as well as tensile modulus, thus the stability of the electrospun nanofiber mats. Therefore, in another embodiment, in conjunction with any of the above and below embodiments, electrospinning of the nonwoven nanofiber separator of the present application may further include thermal annealing the electrospun nonwoven nanofiber mat. In a preferred embodiment, the annealing temperature may be lower than the melting points of the first and second polymer materials. In another preferred embodiment, the nonwoven nanofiber separator of the present application may be thermal annealed at around 100-165°C for about 1-10 hours. In still another preferred embodiment, the electrospun nonwoven nanofiber mat may be thermal annealed at around 160°C for about 5 hours.

In another aspect, the present application provides a method of improving physical stability of a battery separator, including:
dissolving at least one polymer into at least one solvent to form a polymer solution; and
electrospinning the polymer solution on, either one side or both sides of, the battery separator as nanofiber coating; wherein,
the at least one polymer is selected from the group consisting of poly(vinylidene fluoride) (PVDF), polyimide (PI), polyamide (PA), polyacrylonitrile (PAN), polyethylene glycol (PEG), poly(ethylene terephthalate) (PET), poly(vinylidene fluoride-hexafluoropropylene) (PVDF-HFP), and poly(vinylidene fluoride-co-chlorotrifluoroethylene) (PVDF-co-CTFE). In a preferred embodiment, the at least one polymer may include PVDF-HFP.

In another embodiment, in conjunction with any of the above and below embodiments, the polymer solution for electrospinning as nanofiber coating may include the at least one polymer in an amount of about 10-40 wt.%, preferably about 10-30 wt.%, more preferably about 10-20 wt.%, and most preferably about 10-15 wt.%.

In another embodiment, in conjunction with any of the above and below embodiments, the polymer solution for electrospinning as nanofiber coating may include at least one solvent selected from the group consisting of *N*-methyl-2-pyrrolidone (NMP), *N,N-*dimethylacetamide (DMAC), *N,N*-dimethylformamide (DMF), dimethyl sulfoxide (DMSO), acetone and tetrahydrofuran (THF). In a preferred embodiment, the polymer formulation may include DMF.

In another embodiment, in conjunction with any of the above and below embodiments, electrospinning nanofiber coating on a separator may be performed under the following parameters:
Temperature: about 20-30°C;
Voltage: about 30-100kV;
Relative humidity (RH): about 25-60%.

### Example 1 - Formulation of PVDF/PVDF-HFP freestanding separator

To a 250ml round bottom flask, 20ml AR grade acetone, 25.2ml DMF and 40µl lithium chloride solution (25mg LiCl dissolved in 250ml DMF) were mixed well by magnetic stirrer for about 10-15 minutes. 7.83g polymer power of PVDF (Solef® PVDF 6000 series from Solvay) and PVDF-HFP (Solef® PVDF-HFP from Solvay) in the weight ratio of 3:1 was added to a container of THINKY mixer and mixed at 100-500rpm for about 1-2 minutes. After stirring process was completed, the PVDF/PVDF-HFP powder mixture was added to the as prepared acetone/DMF solution. The solution was kept at around 85°C for about 5 hours and the resulting solution was allowed to cool down to room temperature before further process.

### Example 2 - Formulation of PVDF/PVDF-HFP freestanding separator with additive

A formulationof PVDF/PVDF-HFP similar to that of Example 1 was prepared, except that after heating, 3ml of TMOS was added into the as prepared polymer solution by syringe and heated at around 80-85°C for another 5 hours.

### Example 3 - Formulation of PVDF/PVDF-HFP freestanding separator with additive

To a 50ml round bottom flask, 5.0g polymer power of PVDF and PVDF-HFP in the weight ratio of 3:1 was dissolved in 24.2ml DMF and was heated at 80-100°C with stirring at 100-500 rpm for 2 hours. Then, the as prepared polymer solution was allowed to cool down to room temperature. The polymer solution was added with 3ml TEOS, stirred at room temperature for 20-30 minutes, and heated at 80-100°C with stirring at 100-500 rpm for another 5 hours.

### Example 4 - Formulation of PVDF-HFP nanofibers for coating on commercial separator

To a 50ml round bottle flask, 5.0g polymer powder (PVDF-HFP) was dissolved in 24.2ml DMF. The solution was heated at 80-100°C with stirring at 100-500 rpm for 2 hours.

### Example 5 - Electrospinning of freestanding separators

The polymer formulations from Examples 1 and 2 were separately loaded into a 30ml syringe for electrospinning using an electrospinning machine Model No: NANON-01A from Mechanics Electronics Computer Corporation (MECC). The syringe was connected to the spinner head of the machine via a rubber pipe. A roll-to-roll collector with a 200-mm wide aluminium foil as substrate was used to collect the electrospun nanofiber. After electrospinning, the whole nonwoven nanofiber mat with aluminium substrate was treated at 160°C for about 1-5h in a convection oven. Table 1 summarizes the parameters of electrospinning and post-treatment.

**Table 1**

| Separator | Polymer formulation | Feed Rate (ml/h) | RH % | Spinner height (mm) | Roller speed mm/min | Spin head | Final thickness (µm) | Post-treatment |
|---|---|---|---|---|---|---|---|---|
| I | Example 1 | 6.2 | 40 | 150 | 8-10 | 6-hole | 45 | No annealing |
| II | Example 1 | 6.2 | 28 | 150 | 8-10 | 8-hole | 45 | 160°C,1h annealing |
| III | Example 1 | 6.2 | 30 | 150 | 8-10 | 8-hole | 45 | 160°C,5h annealing |
| IV | Example 2 | 6.5 | 35 | 150 | 8-10 | 8-hole | 45 | 160°C,1h annealing |

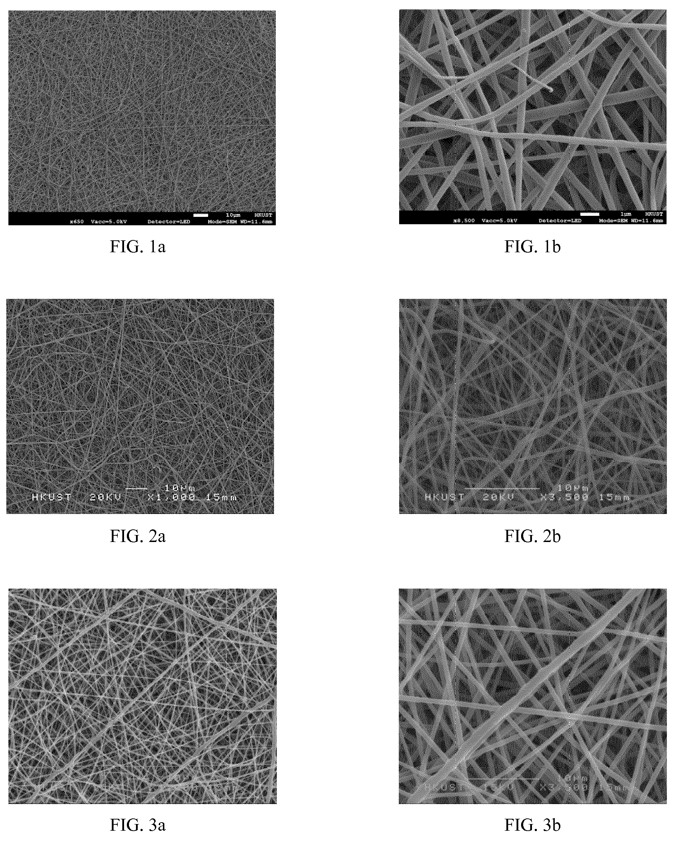

FIGs. 1a-1b, 2a-2b, 3a-3b and 4a-4b show SEM (scanning electron microscope) images of Separators I-IV, respectively.

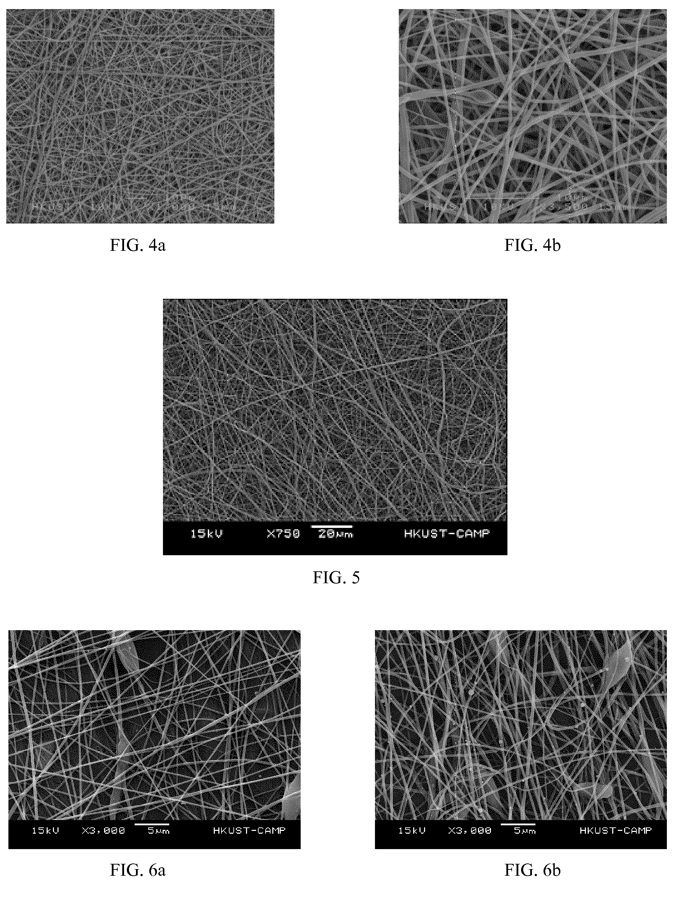

SEM was used to characterize the as prepared nanofiber separators. FIGs. 1a, 2a, 3a and 4a show the low power magnification SEM images of the nanofiber separators. The fibres were formed in nonwoven manner with no polymer beans found in this study. High power magnification images of the corresponding separators are shown in FIGs. 1b, 2b, 3b and 4b, respectively, with fibres diameter of 200-300 nm. While not wishing to be bound by theory, it is believed that the nanofibers in FIGs. 3b and 4b were interconnected to each other after the thermal annealing process.

### Example 6 - Electrospinning of a freestanding separator

The polymer formulation from Example 3 was loaded into a carriage of an electrospinning machine Model No: NS LAB from Elmarco Nanospider™ for electrospinning. A roll-to-roll collector with a 200-mm wide aluminium foil as substrate was used to collect the electrospun nanofiber. After electrospinning, the whole nonwoven nanofiber mat with aluminium substrate was treated at 160°C for 1h in a convection oven and Separator V was obtained. Table 2 summarizes the parameters of electrospinning and post-treatment.

**Table 2**

| | | |
|---|---|---|
| Type of electrode | SE | wire |
| | CE | wire |
| Substrate | Material/Thickness | Aluminium foil, 20µm |
| Condition | Voltage (kV) | 50 |
| | Current (mA) | 0.003-0.006 |
| | Temp. (°C) | 25±3 |
| | RH% | 40±5 |
| Distance (mm) | SE substrate | 230 |
| | Substrate CE | 25 |
| Speed | Substrate speed (mm/min) | 10 |
| | Carriage speed (mm/sec) | 150 |
| Product | Thickness (µm) | 50-55 |

FIG. 5 shows an SEM image of the separator.

Similar to the previous study, SEM was used to characterize and evaluate the electrospinning result. The fibres were formed in nonwoven manner with no polymer beans found in this study with fibres diameter of 200-300 nm. While not wishing to be bound by theory, it is believed that the nanofibers were interconnected to each other after the thermal annealing process.

### Example 7 - Electrospinning of nanofiber coating on a battery separator

The polymer formulation from Example 4 was loaded into a carriage of an electrospinning machine Model No: NS LAB from Elmarco Nanospider™ for electrospinning. A roll-to-roll collector with a trilayer polypropylene-polyethylene-polypropylene (PP-PE-PP) separator, Celgard®_2325) as substrate was used to collect the electrospun nanofiber. Table 3 summarizes the parameters of electrospinning. Separator VI with only one side coated with nanofiber was obtained.

**Table 3**

| | | |
|---|---|---|
| Type of electrode | SE | wire |
| | CE | wire |
| Substrate | Material/Thickness | Commercial separator, 10-30µm |
| Condition | Voltage (kV) | 50 |
| | Current (mA) | 0.003-0.006 |
| | Temp. (°C) | 25±3 |
| | RH% | 40±5 |
| Distance (mm) | SE substrate | 230 |
| | Substrate CE | 25 |
| Speed | Substrate speed (mm/min) | 102 |
| | Carriage speed (mm/sec) | 150 |
| Product | Thickness (µm) | 2-5 |

FIGs. 6a and 6b show SEM images of the electrospun nanofiber coated on the separator.

Similar to the previous study, SEM was used to characterize and evaluate the electrospinning result. It was found that the nanofibers were able to formed and developed on the commercial separators. No destructive effect was found on the commercial separator after the nanofiber coating process.

### Example 8 - Comparison of Mechanical Stability

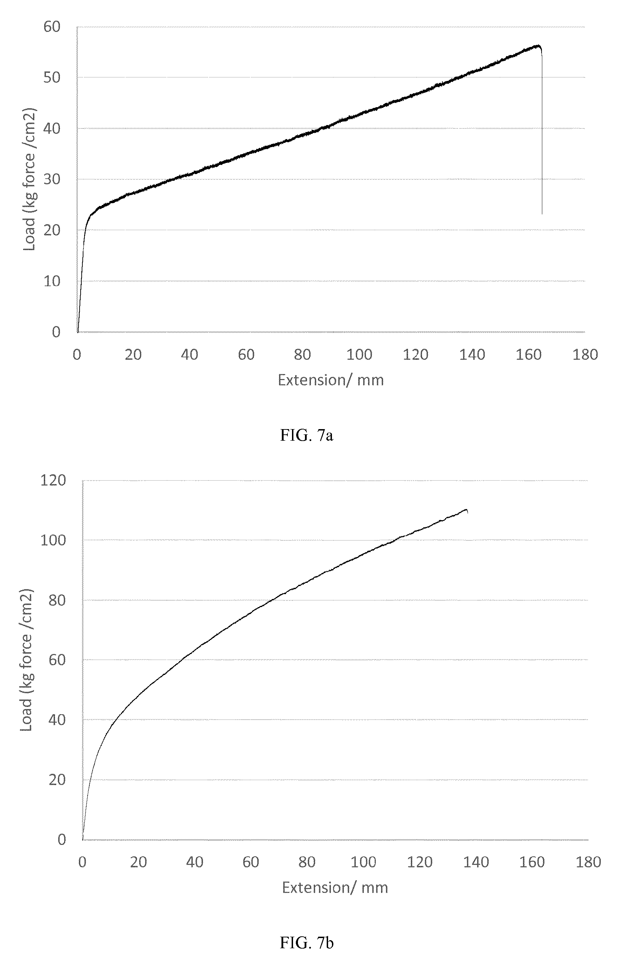

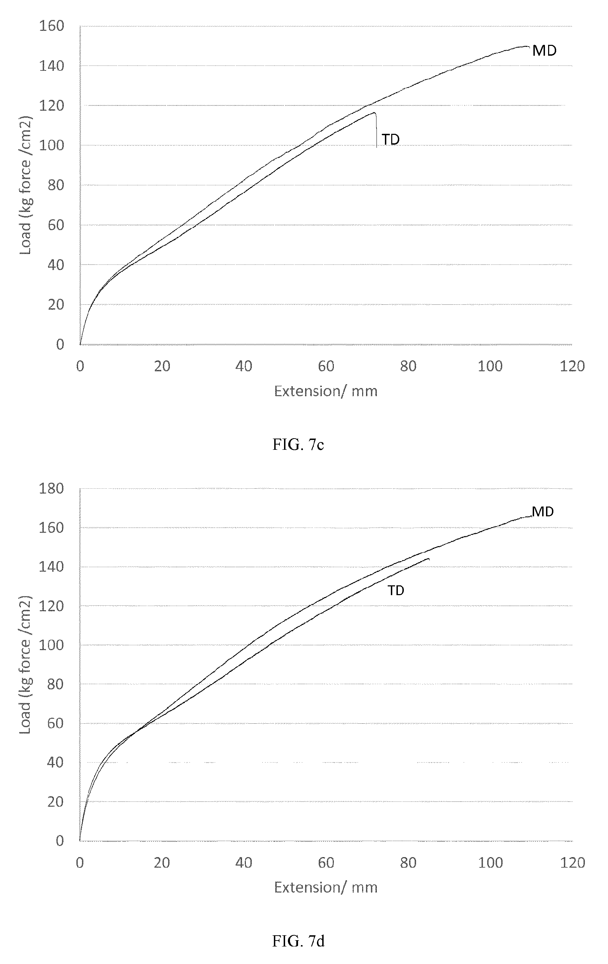

The mechanical performances of Separators I-IV have been confirmed by MTS® mechanical tester. All the test samples were prepared in the size of 305mm (W) x 1000mm (L) with the effective testing size of each sample is 305mm (W) x 600mm (L). The pulling rate of each sample is 10mm/min with all the separators were evaluated under the same testing condition. The mechanical performances are illustrated in FIGs. 7a-7d and Table 4.

**Table 4**

| Separator | I | II | III | | IV | |
|---|---|---|---|---|---|---|
| Direction under test | MD | MD | MD | TD | MD | TD |
| Annealing time | - | 1h | 5h | 5h | 1h | 1h |
| TMOS added | - | - | - | - | 40wt% | 40wt% |
| Max. breaking strength/ kgfcm⁻² | 56 | 110 | 150 | 118 | 166 | 144 |
| Max. deformation/ mm | 164 | 137 | 109 | 72 | 110 | 85 |

As showed in Table 4, it was found that Separator I showed the lowest tensile strength (56kgfcm⁻²) within the study while Separator II showed a double increment in tensile strength (110kgfcm⁻²) after thermal annealing for 1h. Upon increase of annealing time from 1h to 5h, a 3-fold of increment in tensile strength (150kgfcm⁻²) was observed. It was found that thermal treatment at 160°C can improve the tensile strength of the separator in machine direction (MD) which is three times higher than that of non-annealed separator.

It was also found that the use of ceramic additives, such as TMOS, can also improve the tensile strength of separator from 56kgf/cm² (Separator I-MD) to 166kgf/cm² (Separator IV-MD). In addition, the thermal annealed separator showed an improved in modulus which indicated the deformation stability.

Moreover, it was found that both Separators III and IV showed similar tensile strength in both mechanical (MD) and transverse directions (TD), which indicated that these separators are strong in both directions. On the contrary, the maximum deformation of separators decreased (Separator I > Separator II > Separator III) with the increase in tensile strength (Separator III > Separator II > Separator I) which indicated that the nanofibers are bonded or interconnected with each other after thermal annealing process.

As shown in Table 5, the dimension stabilities (MD) Separators I to III increase with the annealing time. Separators I and II showed deformation (>2%) when 10kgfcm⁻² was applied while Separator III showed 1.8% deformation only. Once 20kgfcm⁻² force was applied, about 5% deformation was found for Separators I and II while Separator III only showed deformation value of 3.7%. Upon further increase of loading force to 30kgfcm⁻², serious deformation was found in Separator I (>50%) which indicated the separator deform dramatically and is not suitable to use for the battery packing with 30kgfcm⁻².

In addition, the TMOS modified Separator IV showed the highest dimension stability within the study. 1% deformation was observed when 10kgfcm⁻² was loaded. Once the loading force was increased to 30kgfcm⁻², a 5% deformation was observed which is similar to 20kgfcm⁻² being applied to Separator II.

**Table 5**

| Separator | Post-Treatment | Loading force *vs* % of deformation | | | | | | Dimension stability |
|---|---|---|---|---|---|---|---|---|
| | | 10 kgf/cm² | % | 20 kgf/cm² | % | 30 kgf/cm² | % | |
| I | No annealing | 1.53 | 2.6 | 3.08 | 5.1 | 34.16 | 56.9 | Low |
| II | 160°C,1h annealing | 1.28 | 2.1 | 2.91 | 4.9 | 5.94 | 9.9 | Medium |
| III | 160°C,5h annealing | 1.05 | 1.8 | 2.21 | 3.7 | 4.59 | 7.7 | High |
| IV | 160°C,1h annealing | 0.64 | 1.1 | 1.59 | 2.7 | 3.05 | 5.1 | Highest |

### Example 9 - Differential Scanning Calorimetry (DSC) Analysis

The melting points of Separators I, III and IV were analyzed by DSC analysis. The thermal analysis was performed from 25°C to 300°C with a heating rate of 10°C/min and the whole experiment was protected under nitrogen.

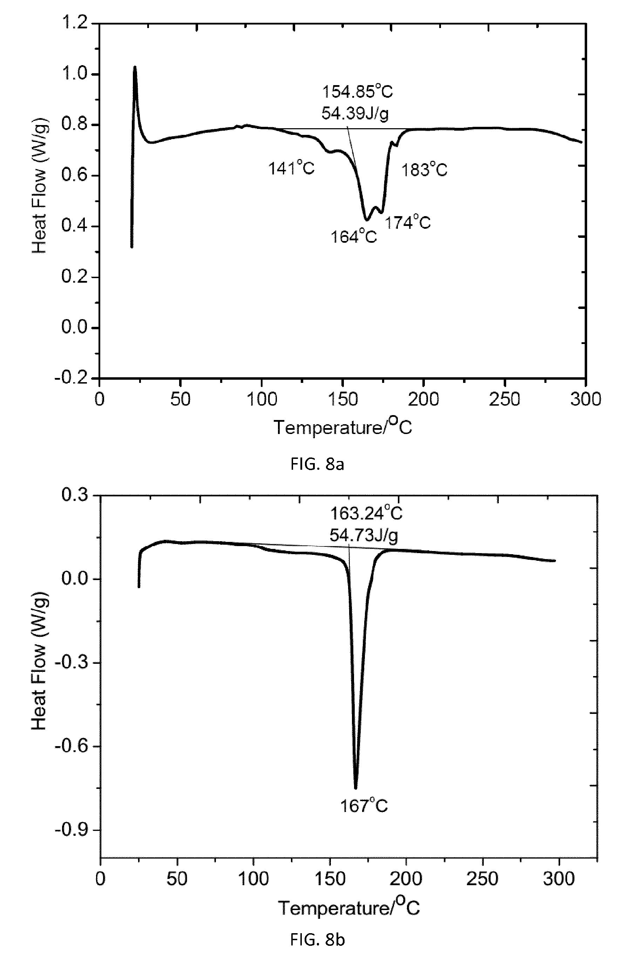

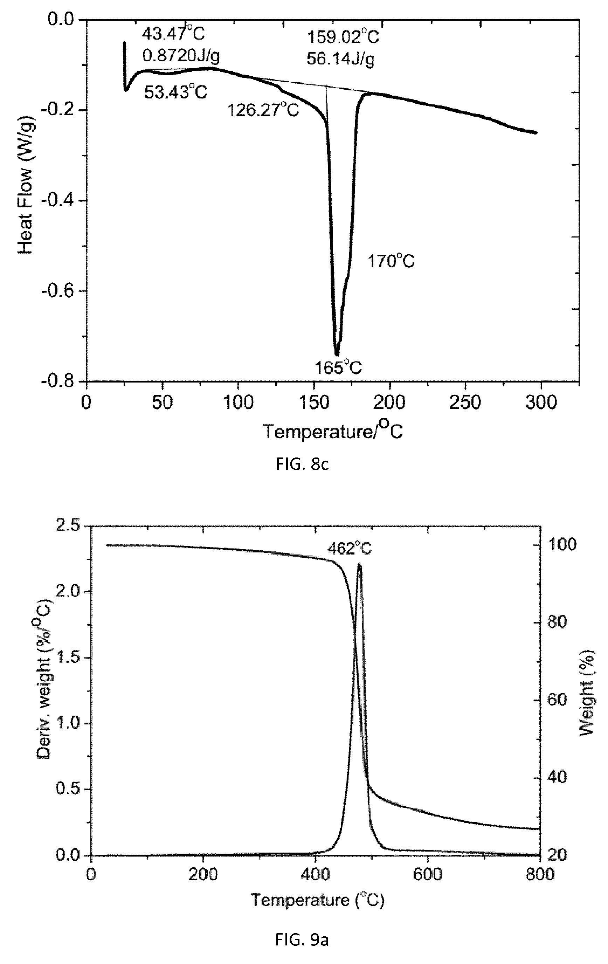

From the DSC analysis shown in FIGs. 8a-8c, Separator I showed several melting profiles which is attributed to the bi-components formulation. From the comparison of results of Separators I and III, it was shown that thermal annealing at 160°C can increase the thermal stability of the separator. The increase in stability may attribute to the increase in crystallinity due to the transformation of the metastable states, from amorphous to orientated molecular chains. Similar to Separator III, Separator IV also showed a more distinct melting profile.

### Example 10 - Thermogravimetric analysis (TGA)

In order to have a better understanding on thermal stability of Separators I, III and IV, TGA was used to analyze their decomposition temperature. The sample was heated from 25°C to 800°C, with a heating rate of 10°C/min, protected under nitrogen.

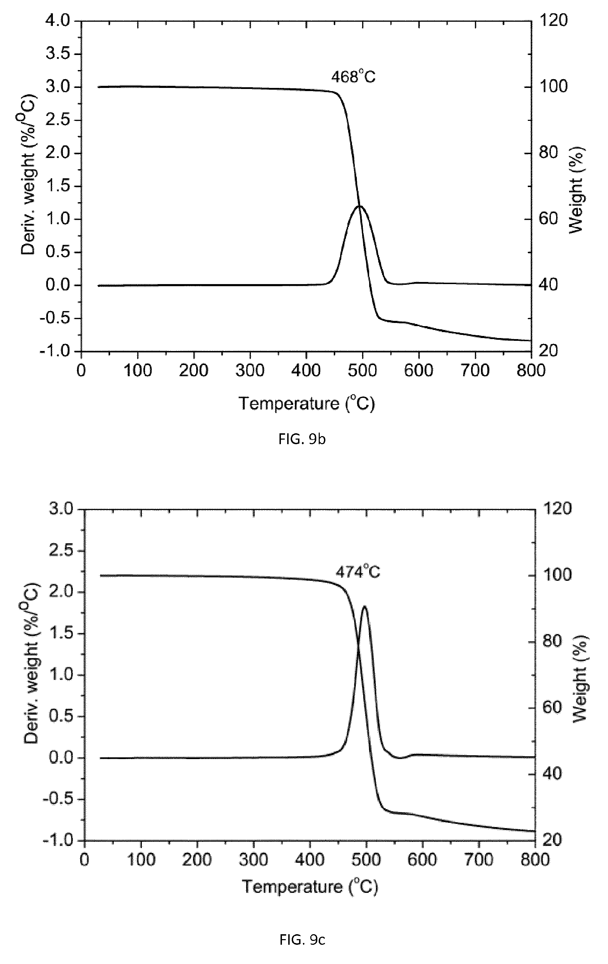

From the TGA study as shown in FIGs. 9a-9c, it was found that Separator IV (474°C) showed the highest thermal stability among the three testing samples. The decomposition temperature of Separator IV is about 12°C higher than that of Separator I (462°C). The high thermal stability may attribute to the addition of ceramic components inside the separator. In addition, thermal annealing can also improve the stability of the separator. Separator III (468°C) showed a slightly higher thermal stability than that of Separator I. The higher thermal stability may attribute to the increase in crystallinity after the annealing process.

### Example 11 - Affinity of the battery electrolyte to the separators

The affinity of the battery electrolyte to Separators I-IV and a commercial separator, Celgard®, was studied by contact angle experiment. Lithium ion battery electrolyte was loaded into a small syringe. The contact angle image was taken when a droplet of electrolyte was dropped on the separator.

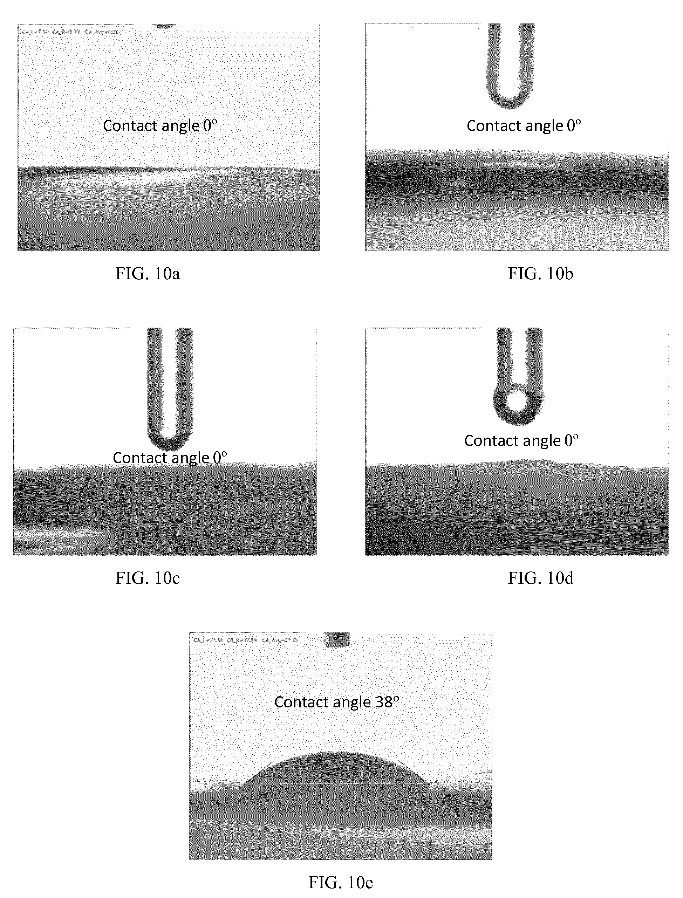

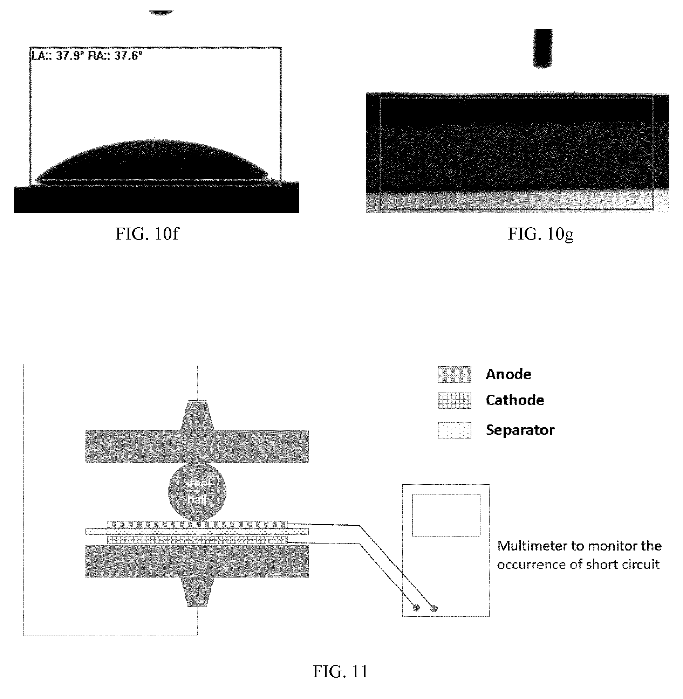

As shown in FIG. 10e, the electrolyte was not fully absorbed by Celgard® after the electrolyte was dropped on its surface. The electrolyte droplet was located on top of the separator, giving a contact angle of about 38° which indicated that this separator has a lower affinity to the LIB electrolyte. Under the same testing condition, the electrolyte was fully absorbed by Separators I-IV (see FIGs. 10a-10d, respectively) with 0° contact angle (cannot be captured by the camera) which indicated that the electrolyte were fully uptake by the nanofiber with good affinity.

Contact angle study was also carried out on nanofiber coated Separator VI. The contact angle highly reduced from 38° to 0° once nanofiber was added on the surface of the commercial separator.

### Example 12 - Porosity test

Porosity of Separators I-VI was monitored. The porosity test was performed by AutoPore IV 9510. As shown in Table 6, it was found that freestanding separator showed a porosity of 81-86% which is much higher than that of the commercial separator. In addition, nanofiber coated Separator VI also showed slight improvement in porosity which is of about 7.9%. The improved in porosity indicated that the separator can absorb more electrolyte which accounted for the improvement in performance stability during charge and discharge processes.

**Table 6**

| | Celgard® | Separator IV (Freestanding) | Separator V (Freestanding) | Separator VI (Coating) |
|---|---|---|---|---|
| Porosity | 39% | 81.98% | 85.93% | 67.90% |

### Example 13 - Mix puncture strength study

The mix puncture strengths of Separators I, III, IV and VI have been characterized by MTS tester. Anode and cathode of 3cm x 3cm in size were prepared while the separators were prepared with slightly larger than the electrodes. Multi-meter was used to monitor the short circuit condition. FIG. 11 shows the schematic set-up of mix puncture strength study. The mix puncture strengths are summarized in Table 7.

It was found that Separators III and IV showed comparable puncture strength with Celgard® while Separator VI showed higher puncture strength than others. Among all the separators, Separator I showed the lowest mix puncture strength as it was not thermally treated, thus, the nanofibers are not interconnected. Thermal annealing can enhance the mean puncture strength from 563.4N (Separator I) to 875.9N (Separator III). Upon addition of additive to the polymer formulations, the mix puncture strength can further improve to 980.7N which accounted for the best puncture result within the study.

Nanofiber coated Separator VI (1093 N) showed an improved in puncture strength as compared with Celgard® (898.4 N). This may attribute to the additional nanofiber layer which acts as a sponge layer, thus, an increased in puncture strength was found.

**Table 7**

| Separator | Celgard® | I | III | IV | VI |
|---|---|---|---|---|---|
| Trial 1 | 933.1 | 517.9 | 882.9 | 989.0 | 1093.01 |
| Trial 2 | 957.7 | 608.8 | 868.8 | 972.3 | - |
| Trial 3 | 804.5 | - | - | - | - |
| Mean (N) | 898.4 | 563.4 | 875.9 | 980.7 | 1093.01 |

### Example 14 - Battery performance

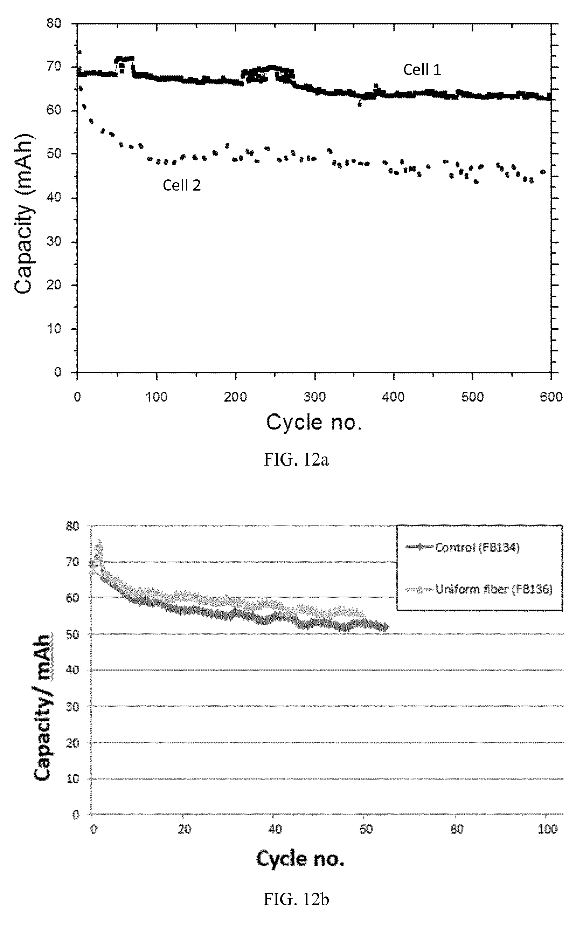

To study the effect on battery performance, nanofiber freestanding Separator V and Celgard® were separately packed into a 70mAh lithium ion battery for charge-discharge performance test. The test conditions are listed in Table 8 and the battery performance is shown in FIG. 12a. The battery with nanofiber separator showed capacity retention of 93.1% after 600 charge and discharge cycles. This capacity drop is much smaller than that of commercial available separator (Celgard®), which only has 72.1% capacity retention after 600 cycle test. This indicates that the battery prepared by nanofiber separator is more stable and reliable, and has a longer service life as compared to the battery prepared by Celgard® separator.

**Table 8**

| | Cell 1 (Nanofiber freestanding Separator V) | Cell 2 (Celgard® separator) |
|---|---|---|
| Charge/discharge profile | Charge to 4.35V at 0.5C | Charge to 4.2V at 0.5C |
| | Discharge to 2.7V at 0.5C | Discharge to 3.2V at 0.5C |
| Initial capacity (10^{th} cycle) | 68.1mAh | 63.9mAh |
| Capacity after 600 cycles | 63.4mAh | 46.1mAh |
| Capacity retention after 600 cycles | 93.1% | 72.1% |

Another charge-discharge performance test was performed under the conditions provided in Table 9. As shown in FIG. 12b, the battery made by nanofiber coated separator VI showed a capacity retention of 84.4% after 60 charge and discharge cycles. This capacity drop is slightly smaller than that of commercial available separator, which only has 81.1 % capacity retention after 60 cycle test. This indicates that the battery prepared by nanofiber coated separator is slightly more stable and reliable, and has a longer service life as compared to the battery prepared by commercial separator.

**Table 9**

| | FB136 (Nanofiber coated Separator VI) | FB 134 (Celgard® separator) |
|---|---|---|
| Charge/discharge profile | Charge to 4.35V at 0.5C | Charge to 4.35V at 0.5C |
| | Discharge to 2.7V at 0.5C | Discharge to 2.7V at 0.5C |
| Initial capacity (10^{th} cycle) | 65.5mAh | 63.9mAh |
| Capacity after 60 cycles | 55.3mAh | 51.8mAh |
| Capacity retention after 60 cycles | 84.4% | 81.1% |

Thus, specific nanofiber separators and methods of improving physical stability of a battery separator have been disclosed. It should be apparent, however, to those skilled in the art that many more modifications besides those already described are possible without departing from the inventive concepts herein. The inventive subject matter, therefore, is not to be restricted except in the spirit of the disclosure. Moreover, in interpreting the disclosure, all terms should be interpreted in the broadest possible manner consistent with the context. In particular, the terms "includes", "including", "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A nonwoven nanofiber separator, comprising a composite of a first polymer material and a second polymer material and optionally at least one additive, wherein:
the first polymer material comprises at least one member selected from the group consisting of poly(vinylidene fluoride), polyimide, polyamide and polyacrylonitrile, preferably the first polymer material comprises poly(vinylidene fluoride);
the second polymer material comprises at least one member selected from the group consisting of polyethylene glycol, polyacrylonitrile, poly(ethylene terephthalate), poly(vinylidene fluoride), poly(vinylidene fluoride-hexafluoropropylene) and poly(vinylidene fluoride-co-chlorotrifluoroethylene), preferably the second polymer material comprises poly(vinylidene fluoride-hexafluoropropylene);
the at least one additive is selected from the group consisting of tetramethyl orthosilicate and tetraethyl orthosilicate; and
the second polymer material is different from the first polymer material.

2. A nonwoven nanofiber separator of claim 1, wherein the second polymer material has a melting temperature lower than a melting temperature of the first polymer material.

3. A nonwoven nanofiber separator of any one of the preceding claims, wherein the first and second polymer materials are in a weight ratio ranging from about 3:1 to about 1:1, preferably about 3:1 to about 2:1, more preferably about 3:1 to about 3:2, and most preferably about 3:1.

4. A nonwoven nanofiber separator of any one of the preceding claims, wherein the nonwoven nanofiber separator is prepared by electrospinning a polymer formulation on aluminum foil to give a freestanding separator, wherein the polymer formulation comprises the first polymer material, the second polymer material, at least one solvent, optionally the at least one additive and optionally lithium chloride.

5. A nonwoven nanofiber separator of any one of the preceding claims, wherein the polymer formulation comprises the first and second polymer materials in a total amount of about 15-25 wt.% of the formulation, preferably about 15-20 wt.%, and more preferably about 16.5 wt.%.

6. A nonwoven nanofiber separator of any one of the preceding claims, wherein the polymer formulation further comprises about 1-5 wt.% of the at least one additive, preferably about 2-5 wt.%, more preferably about 3-5 wt.%, and most preferably about 5 wt.%.

7. A nonwoven nanofiber separator of any one of the preceding claims, wherein the polymer formulation comprises about 0.1-0.6µg of lithium chloride, preferably about 0.1-0.5µg, more preferably about 0.2-0.4µg, and most preferably about 0.3-0.4µg.

8. A nonwoven nanofiber separator of any one of the preceding claims, wherein the at least one solvent is selected from the group consisting of *N*-methyl-2-pyrrolidone, *N*,*N-*dimethylacetamide, *N,N-*dimethylformamide, dimethyl sulfoxide, acetone and tetrahydrofuran, preferably the at least one solvent comprises *N,N-*dimethylacetamide and acetone.

9. A nonwoven nanofiber separator of any one of the preceding claims, wherein the at least one solvent comprises *N,N-*dimethylacetamide and acetone in a weight ratio ranging from about 3:1 to about 1:1, preferably about 2:1 to about 1:1, more preferably about 1.5:1 to about 1:1, and most preferably about 1.25:1.

10. A nonwoven nanofiber separator of any one of the preceding claims, wherein the nonwoven nanofiber separator is prepared by the following steps:
adding the first and second polymer materials into the at least one solvent, optionally together with lithium chloride;
heating the mixture at around 80-100°C with stirring for about 2-5 hours;
optionally adding the at least one additive, followed by heating at around 80-100°C for about 2-5 hours;
cooling down the polymer formulation solution to room temperature; and
loading the polymer formulation solution to a syringe for electrospinning.

11. A nonwoven nanofiber separator of any one of the preceding claims, wherein the nonwoven nanofiber separator is thermal annealed after the electrospinning; optionally the annealing temperature is lower than the melting points of the first and second polymer materials; and
optionally the nonwoven nanofiber is thermal annealed at around 100-165°C for about 1-10 hour.

12. A method of improving physical stability of a battery separator, comprising:
dissolving at least one polymer into at least one solvent to form a polymer solution; and
electrospinning the polymer solution on, either one side or both sides of, the battery separator as nanofiber coating; wherein,
the at least one polymer is selected from the group consisting of poly(vinylidene fluoride), polyimide, polyamide, polyacrylonitrile, polyethylene glycol, poly(ethylene terephthalate), poly(vinylidene fluoride-hexafluoropropylene), and poly(vinylidene fluoride-co-chlorotrifluoroethylene).

13. A method of claim 12, wherein the at least one polymer is poly(vinylidene fluoride-hexafluoropropylene).

14. A method of any one of claims 12 and 13, wherein the polymer solution comprises the at least one polymer in an amount of about 10-40 wt.%, preferably about 10-30 wt.%, more preferably about 10-20 wt.%, and most preferably about 10-15 wt.%.

15. A method of any one of claims 12 to 14, wherein the at least one solvent is selected from the group consisting of *N*-methyl-2-pyrrolidone, *N,N-*dimethylacetamide, *N,N-*dimethylformamide, dimethyl sulfoxide, acetone and tetrahydrofuran.
